# EUROPÄISCHE PATENTSCHRIFT

(11) **EP 1 424 902 B1**
(45) Veröffentlichungstag und Bekanntmachung des Hinweises auf die Patenterteilung: **28.12.2005**
(21) Anmeldenummer: 02726222.9
(22) Anmeldetag: 27.03.2002
(51) Int. Cl.: A22B 1/00

(54) **GASBETÄUBUNGSANLAGE FÜR SCHLACHTTIERE**
GAS STUNNING FACILITY FOR SLAUGHTER ANIMALS
INSTALLATION D'ANESTHESIE AU GAZ POUR ANIMAUX DE BOUCHERIE

(30) Priorität: 27.03.2001 DE 10114974
(43) Veröffentlichungstag der Anmeldung: 09.06.2004
(73) Patentinhaber: Banss Schlacht- und Fördertechnik GmbH, 35216 Biedenkopf (DE)
(72) Erfinder: RUNKEL, Gerhard, 35719 Angelburg (DE)
(74) Vertreter: Klunker . Schmitt-Nilson . Hirsch
(86) Internationale Anmeldenummer: PCT/EP2002/003452
(87) Internationale Veröffentlichungsnummer: WO 2002/076219

(56) Entgegenhaltungen:
- EP-A- 0 441 633
- WO-A-94/27425
- US-A- 3 828 396
- US-A- 5 788 564

## Beschreibung

Die Erfindung bezieht sich auf eine Gasbetäubungsanlage für Schlachttiere, aufweisend
(a) eine Grube (4) zur Aufnahme von Betäubungsgas (8) mit einem bestimmten Niveau (6),
(b) eine Mehrzahl von Betäubungsbehältern (18), die jeweils eine öffenbare Tür (24; 26) und eine derartige Größe aufweisen, dass mindestens ein Schlachttier in dem Betäubungsbehälter (18) aufgenommen werden kann;
(c) und eine Bewegungseinrichtung, mit der die Betäubungsbehälter (18) nacheinander jeweils
   - in einem ersten Bewegungsabschnitt von einer Beladungsstation (30), wo der Betäubungsbehälter (18) mit mindestens einem Schlachttier beladen werden kann, in die Grube (4) bis unter das Betäubungsgasniveau (6),
   - dann in einem zweiten Bewegungsabschnitt unter dem Betäubungsgasniveau (6) durch die Grube (4),
   - dann in einem dritten Bewegungsabschnitt aus der Grube (4) zu einer Entladungsstation (32), wo das Schlachttier entladen werden kann, wobei die Entladungsstation (32) mit der Beladungsstation (30) zusammengefasst ist oder von der Beladungsstation (30) separat ist,
   - und schließlich, sofern die Entladungsstation (32) von der Beladungsstation (30) separat ist, in einem vierten Bewegungsabschnitt von der Entladungsstation (32) wieder zu der Beladungsstation (30) bewegbar sind,
   - wobei die Bewegungseinrichtung dafür ausgebildet ist, die Betäubungsbehälter (18) in dem zweiten Bewegungsabschnitt mit zeitlich gemittelt geringerer Geschwindigkeit und mit geringerem gegenseitigen Abstand zu bewegen als in dem ersten Bewegungsabschnitt, (und wobei - bei dem ersten Aspekt der Erfindung - die Bewegungseinrichtung einen eigenen Bewegungsantrieb für den zweiten Bewegungsabschnitt aufweist).

Eine Gasbetäubungsanlage dieser Art ist aus EP 0 441 633 A2 bekannt. Dort ist als Bewegungsantrieb für den zweiten Bewegungsabschnitt ein Paar von Transportbändern am Grund der Betäubungsgas-Grube vorgesehen. Die einzelnen Betäubungsbehälter können rutschend auf den Transportbändern verschoben werden.

Nach einem ersten Aspekt der Erfindung ist die erfindungsgemäße Gasbetäubungsanlage demgegenüber dadurch gekennzeichnet, dass der Bewegungsantrieb für den zweiten Bewegungsabschnitt eine Transportkette mit Mitnehmern für die Betäubungsbehälter aufweist.

Nach einem zweiten Aspekt der Erfindung ist die erfindungsgemäße Gasbetäubungsanlage demgegenüber dadurch gekennzeichnet, dass die Betäubungsbehälter jeweils mit einem Einzelbewegungsantrieb ausgerüstet sind.

Statt des in den Ansprüchen und im vorangegangenen Teil der Beschreibung verwendeten Begriffs "Betäubungsbehälter" wird im nachfolgenden Teil der Beschreibung der Begriff "Transportgondel" verwendet. Dies bedeutet nicht, dass die Transportgondeln zwingend an Tragteilen hängend vorgesehen sein müssten. Es ist durchaus möglich, die Transportgondeln auch in von unten abgestützter Ausbildung vorzusehen, was ganz besonders für den zweiten Bewegungsabschnitt gilt.

Zur umfangreicheren Erläuterung der Erfindung wird die Erfindung anschließend einer weiteren bekannten Betäubungsanlage desjenigen Typs, wie er durch US 3,828,396 A veröffentlicht ist, gegenübergestellt. Diese bekannte Gasbetäubungsanlage ist so aufgebaut, wie im Anfangsabsatz der vorliegenden Beschreibung wiedergegeben, aber weist nicht das Merkmal "wobei die Bewegungseinrichtung dafür ausgebildet ist, die Betäubungsbehälter in dem zweiten Bewegungsabschnitt mit seitlich gemittelt geringerer Geschwindigkeit und mit geringerem gegenseitigen Abstand zu bewegen als in dem ersten Bewegungsabschnitt" auf.

Bei dieser bekannten Gasbetäubungsanlage sind die Transportgondeln mit bestimmtem gegenseitigen Abstand an einem Kettenpaar befestigt, welches eine im wesentlichen rechteckige (natürlich mit abgerundeten Ecken) Bewegungsbahn durchläuft. Das angetriebene Kettenpaar stellt somit eine Bewegungseinrichtung dar. Das Kettenpaar hält jeweils an, wenn sich eine der Transportgondeln an der Beladungsstation befindet, so daß während des Anhaltezeitraums dort ein Schlachttier (oder bei entsprechend größeren Transportgondeln auch mehrere Schlachttiere) bei geöffneter Tür in die betreffende Transportgondel eingebracht werden kann. Dann wird die Tür der Transportgondel geschlossen. Durch Weiterbewegen des Kettenpaars um eine Bewegungsstrecke, die dem gegenseitigen Abstand der Transportgondel entspricht, wird die soeben in der Beladungsstation beladene. Transportgondel abgesenkt. In einer oder mehreren derartigen Absenkungsstrecken gelangt die betrachtete Transportgondel so tief in die Grube, daß sich das enthaltene Schlachttier unterhalb des Betäubungsgasniveäus befindet, also keine Luft mehr zum Atmen hat; das Schlachttier wird betäubt. Im Ausgangsbereich fuhrt das Kettenpaar nach oben. Die betrachtete Transportgondel wird in einer oder mehreren aufeinanderfolgenden Bewegungsstrecken angehoben bis zu einer Entladungsstation. Dort wird die Tür geöffnet und das betäubte Schlachttier aus der Transportgondel ausgebracht. Durch Weiterbewegen des Kettenpaars wird die betrachtete Transportgondel wieder zu der Beladungsstation bewegt.

Die bekannte Gasbetäubungsanlage benötigt eine ziemlich breite (gemessen in Bewegungsrichtung der Transportgondeln in dem zweiten Bewegungsabschnitt) und/oder tiefe Grube, damit die Verweilzeit der Schlachttiere unter dem Betäubungsgasniveau mit Sicherheit lang genug für eine sichere Betäubung ist. Dieser Gesichtspunkt verstärkt sich immer mehr, je größer die mittlere Bewegungsgeschwindigkeit der Transportgondeln ist, wobei man an sich zum Zwecke der Steigerung der Stundenleistung, d. h. betäubte Schlachttiere pro Stunde, der Gasbetäubungsanlage diese mittlere Transportgeschwindigkeit gerne möglichst hoch machen würde. Die Wahl größerer Transportgondeln, die z.B. mit zwei Schlachttieren beladen werden können, sind ein anderer Weg zur Steigerung der Stundenleistung der Gasbetäubungsanlage, aber die Kosten der Anlage steigen beim Übergang zu größeren Transportgondeln sehr steil an.

Im Vergleich zu diesem Stand der Technik schafft die Erfindung eine Gasbetäulungsanlage, bei der die erforderliche. Verweilzeit des jeweiligen Schlachttiers unter dem Betäubungsgasniveau mit geringerem Raumbedarf der Grube erfüllt wird. Oder in anderen Worten: Die gleiche Stundenleistung kann mit einer Grube geringeren Raumbedarfs erreicht werden; bei beibehaltenem Raumbedarf der Grube läßt sich die Stundenleistung steigern.

Bei der erfindungsgemäßen Gasbetäubungsanlage ist die enge Bindung des Bewegungsablaufs in dem zweiten Bewegungsabschnitt an den Bewegungsablauf in dem ersten Bewegungsabschnitt aufgehoben. Und man kann sogar, wenn man will, den gegenseitigen Abstand der Transportgondeln in dem ersten Bewegungsabschnitt länger wählen als bei der bisherigen Gasbetäubungsanlage hoher Stundenleistung, um hierdurch sicheres, tiefes Senken der betreffenden Transportgondel "in einem Zug" deutlich unterhalb des Betäubungsgasniveaus zu erreichen. Aufgrund der zeitlich gemittelt geringeren Geschwindigkeit und des geringeren gegenseitigen Abstands der Transportgondeln in dem zweiten Bewegungsabschnitt steht in der Grube, bzw. in dem zweiten Bewegungsabschnitt für jede der Transportgondeln ein relativ langer Zeitabschnitt für die Schlachttierbetäubung zur Verfügung, ohne daß die Grube übermäßig breit und/oder tief ausgeführt werden müßte. Möglichst geringes Betäubungsgasvolumen in der Grube bedeutet normalerweise auch möglichst geringe Betäubungsgasverluste an die Umgebung, so daß die erfindungsgemäße Konstruktion der Gasbetäubungsanlage dabei hilft, den von den Kosten des Betäubungsgases abhängigen Teil der Betriebskosten der Anlage im Griff zu behalten. Außerdem kann man die Zeit für die Beladung und/oder Entladung verlängern und quasi zum Ausgleich die echte Bewegungsgeschwindigkeit im etsten und dritten Bewegungsabschnitt erhöhen.

"Die gemittelte Geschwindigkeit" im zweiten Bewegungsabschnitt bedeutet diejenige Geschwindigkeit, die sich beim Zusammenfassen der intermittierenden Bewegungsphasen mit den intermittierenden Stillstandsphasen ergibt. Es gibt naturgemäß auch Ausrführungsformen, bei denen es im zweiten Bewegungsabschnitt überhaupt keine Stillstandsphasen gibt. Bei der Aussage "die Transportgondeln in dem zweiten Bewegungsabschnitt mit zeitlich gemittelt geringerer Geschwindigkeit ... zu bewegen als im ersten Bewegungsabschnitt" Stellt man besonders sinnvoll eine Relation zwischen gernittelter Geschwindigkeit im zweiten Bewegungsabschnitt und gemittelter Geschwindigkeit im ersten Bewegungsabschnitt (die in vielen Fällen gleich der gemittelten Geschwindigkeit im dritten Bewegungsabschnitt ist) her. Auch bei der Bewegung im ersten Bewegungsabschnitt und im dritten Bewegungsabschnitt ist die gemittelte Geschwindigkeit zu verstehen als zusammengefaßte Betrachtung aus intermittierenden Bewegungsphasen mit echter Geschwindigkeit und intermittierenden Stillstandsphasen.

In der vorliegenden Patentschrift wird an mehreren Stellen von "gegenseitigern Abstand" der Transportgondeln, gesprochen. Hierunter soll in der Regel ein Abstand gemessen von Aufhängungspunkt einerbetrachteten Transportgondel zu Aufhängungspunkt einer benachbarten, betrachteten Transportgondel verstanden werden.

Die erfindungsgemäße Gasbetäubungsanlage ist bevorzugt für Schweine vorgesehen, kann jedoch problemlos auch für andere Schlachttiere ausgelegt werden, vorzugsweise andere nicht besonders große Schlachttiere, wie Schafe, Ziegen. Der gewählt Begriff "Transportgondeln" soll keineswegs bedeuten, daß die Transportgondeln zwingend an Tragteilen hängend vorgesehen sein müßten. Es ist durchaus möglich, die Transportgondeln auch in von unten abgestützter Ausbildung vorzusehen, was ganz besonders für den zweiten Bewegungsabschnitt gilt. Der Begriff "Tür" der Transportgondel ist funktional zu verstehen. Es geht lediglich darum, daß ein Teil der Umgrenzung der betreffenden Transportgondel wahlweise geöffnet und geschlossen sein kann, damit Schlachttiere ein- und ausgeladen werden können. Die Tür zum Einladen kann identisch mit der Tür zum Ausladen sein. In den meisten Fällen hat man jedoch eine erste Tür zum Einladen und eine zweite Tür zum Ausladen. In der Praxis sind die Transportgondeln häufig käfigartige Gebilde und die Türen sind jeweils um eine Schwenkachse zum Öffnen und Schließen schwenkbar. Die Schwenkachse kann insbesondere horizontal oder vertikal sein.

Außerdem wird ausdrücklich darauf hingewiesen, daß die Beladungsstation und die Entladungsstation zusammenfallen können. In diesem Fall hat man keinen expliziten vierten Bewegungsabschnitt mehr. Als Betäubungsgas kommt, wie auch beim Stand der Technik, in erster Linie Kohlendioxid in Betracht.

Nach dem zweiten Aspekt der Erfindung sind die Transportgondeln jeweils mit einem Einzelbewegungsantrieb ausgerüstet. Aufgrund der Einzelbewegungsantriebe können die Transportgondeln gleichsam unabhängig voneinander fahren. Es ist ohne Schwierigkeiten möglich, die Transportgondeln in dem zweiten Bewegungsabschnitt mit zeitlich gemittelt geringerer Geschwindigkeit und mit geringeremn gegenseitigen Abstand zu bewegen als in dem ersten Bewegungsabschnitt bzw. dem dritten Bewegungsabschnitt. Die Steuerung hierfür kann insbesondere so ausgebildet sein, daß der Einzelbewegungsantrieb einer betrachteten Transportgondel beim Überfahren einer bestimmten Position, die in etwa am Übergang zwischen dem ersten und dem zweiten Bewegungsabschnitt liegt, ein Signal erhält, mit einer verringerten Bewegungsgeschwindigkeit weiter zu fahren. Der verringerte gegenseitige Abstand der Transportgondeln stellt sich dann automatisch ein, weil laufend weitere Transportgondeln aus dem ersten Bewegungsabschnitt mit der hohen Bewegungsgeschwindigkeit nachkommen. In etwa am Übergang zwischen dem zweiten und dritten Bewegungsabschnitt erhält der Einzelbewegungsantrieb der betreffenden Transportgondel ein weiteres Signal, welches ihn veranlaßt, für den dritten Bewegungsabschnitt wieder auf die höhere Bewegungsgeschwindigkeit überzugehen. Naturgemäß müssen die Einzelbewegungsantriebe im Bereich der Beladungsstation und im Bereich der Entladungsstation so gesteuert werden, daß die betrachtete Transportgondel an der richtigen Stelle anhält und nach dem Beladen bzw. Entladen wieder losfährt.

Es ist bevorzugt, daß der jeweilige Einzelbewegungsantrieb in formschlüssiger Weise mit einem stationären Gegenpart zusammenwirkt. Der formschlüssige Eingriff stellt eine Sicherung gegen unbeabsichtigtes Abwärtsfahren der betreffenden Transportgondel dar.

Eine ganz besonders bevorzugte. Ausführung des Einzelbewegungsantriebs besteht darin, daß der Einzelbewegungsantrieb einen Elektromotor und ein mit dem Elektromotor antreibbares Kettenrad aufweist, und daß der stationäre Gegenpart eine Kette ist. Vorzugsweise ist diese Kette an einer geeigneten Tragstruktur befestigt und in ihrer Lage festgelegt. Es versteht sich, daß eine Führung für die Transportgondeln vorgesehen ist, damit auch unter diesem Aspekt für Sicherheit des Eingriffs zwischen dem Kettenrad und der Kette gesorgt ist. Alternativ oder zusätzlich kann man zwei Kettenräder vorsehen, die von beiden Seiten mit der Kette zusammenwirken. Eine Kette hat den großen Vorteil, daß mit ihr auch gekrümmte Bewegungsstrecken mit vergleichsweise geringem Bauaufwand bewältigt werden können. Statt der Paarung Kettenrad mit Kette kann man alternativ die Paarung Zahnrad mit Zahnstange einsetzen. In aller Regel wird es günstig sein, zwischen dem Elektromotor und dem Kettenrad bzw. dem Zahnrad ein Untersetzungsgetriebe vorzusehen. Wenn dieses Getriebe ein selbsthemmendes Getriebe ist, z. B. ein Schneckengetriebe, ist mittels des Getriebes sichergestellt, daß die betreffende Transportgondel ohne Stromzufuhr zu dem Elektromotor sich nicht unter dem Eigengewicht bzw. Summe aus Eigengewicht und Schlachttier (en) nach unten bewegen kann. Alternativ oder zusätzlich kann man einer Sicherheitsbremse vorsehen.

Beim ersten Aspekt der Erfindung sind in eines bevorzugten Ausbildung die Transportgondeln freigebbar mit mindestens einer Transportkette als erstem Bewegungsantrieb gekoppelt und ist für den zweiten Bewegungsabschnitt ein zweiter Bewegungsantrieb für die Transport im von der Transportkette freigegebenen Zustand vorgesehen. In den meisten Fallen ist es bevorzugt, zwei Transportketten, und zwar je eine Transportkette für jeden Endbereich der betreffenden Transportgondel, vorzusehen. Diese Ausbildung verwirklicht das Prinzip, die Transportgondeln für einen Großteil ihres Bewegungswegs mittels mindestens einer Transportkette zu bewegen (diese auch im Stand der Technik praktizierte Möglichkeit ist konstruktiv einfach und kostengünstig herstellbar), aber für den zweiten Bewegungsabschnitt mit einer Abkopplung von der Transportkette und einem eigenen Bewegungsantrieb für die Transportgondeln zu arbeiten.

Die Transposkrette für den zweiten Bewegungsabschnitt hat eine geringere Bewegungsgeschwindigkeit als die Transportkette für den ersten Bewegungsabschnitt und weist Mitnehmer für die Transportgondeln in einem derartigen Abstand auf, daß die Transportgondeln mit geringerem gegenseitigen Abstand bewegt werden als im ersten Bewegungsabschnitt, vorzugsweise mit geringem gegenseitigem Abstand.

Vorzugsweise ist die Grube so breit, daß sie Platz für mindestens drei Transportgondeln (vorzugsweise wenn diese mit geringem Freiraum zwischen sich angeordnet sind) nebeneinander bietet. Im Betriebsverlauf wird während der meisten Zeit eine Transportgondel weniger in der Grube sein als Platz für Maximalbesetzung vorhanden ist. Die Beschreibung bevorzugter Ausführungsbeispiele, weiter unten, wird zeigen, wie dies zusammenhängt. Es ist, wie schon weiter vom angesprochen, ein besonderer Vorteil der erfindungsgemäßen Gasbetäubungsanlage, daß selbst mit einer Grube, die nicht besonders breit ist, hohe Stundenleistungen bewältigt werden können. Auch der untere Grenzfall, d.h. Platz nur für im wesentlichen zwei Transportgondeln nebeneinander, ist eine gut praktizierbare Ausführungsform der Erfindung.

Vorzugsweise ist die Grube von ihrem Grund bis zu dem Betäubungsgasniveau weniger tief als die zweifache Höhe einer Transportgondel. Bei dieser Ausgestaltung der Erfindung wird die Verkleinerung des Raumbedarfs der Grube besonders augenfällig. Besonders bevorzugt ist es, wenn die gesamte Tiefe nur so groß ist, daß - bei erstrebenswert geringem Freiraum zwischen dem Grund der Grube und der Unterseite der betrachteten Transportgondel - zwischen der oberen Begrenzung des Schlachttierraums in der Transportgondel und dem Betäubungsgasniveau nur eine relativ kleine Höhendifferenz von z.b. 20 bis 50 cm besteht, die für den sicheren Ablauf der Betäubung ausreicht.

Die Übergänge zwischen dem ersten und dem zweiten Bewegungsabschnitt und/oder dem zweiten Bewegungsabschnitt und dem dritten Bewegungsabschnitt und/oder dem dritten Bewegungsabschnitt und dem vierten Bewegungsabschnitt (sofern dieser überhaupt explizit vorhanden ist) und/oder zwischen dem vierten Bewegungsabschnitt und dem ersten Bewegungsabschnitt können gleichsam mit ausgeprägtem Abknicken der Bewegungsbahn verlaufen oder alternativ mit mit mehr oder weniger großem Radius abgerundeter Bewegungsbahn. Auch dieser Gesichtspunkt wird bei der nachfolgenden Beschreibung konkreter Ausführungsbeispiele noch deutlicher werden.

Die Erfindungen und Ausgestaltung der Erfindung wird nachfolgend anhand schematisiert zeichnerisch dargestellter Ausführungsbeispiele noch näher erläutert, wobei die Ausführungsbeispiele gemäβ Fig. 3/4 und gemäβ Fig. 5/6 erst dann patentgemäß sind, wenn manjeweils die Zylinder-Kolben-Einheint 50 bzw. 72 durch eine Transportkette mit Mitnehrmern erseitrt. Es zeigt:

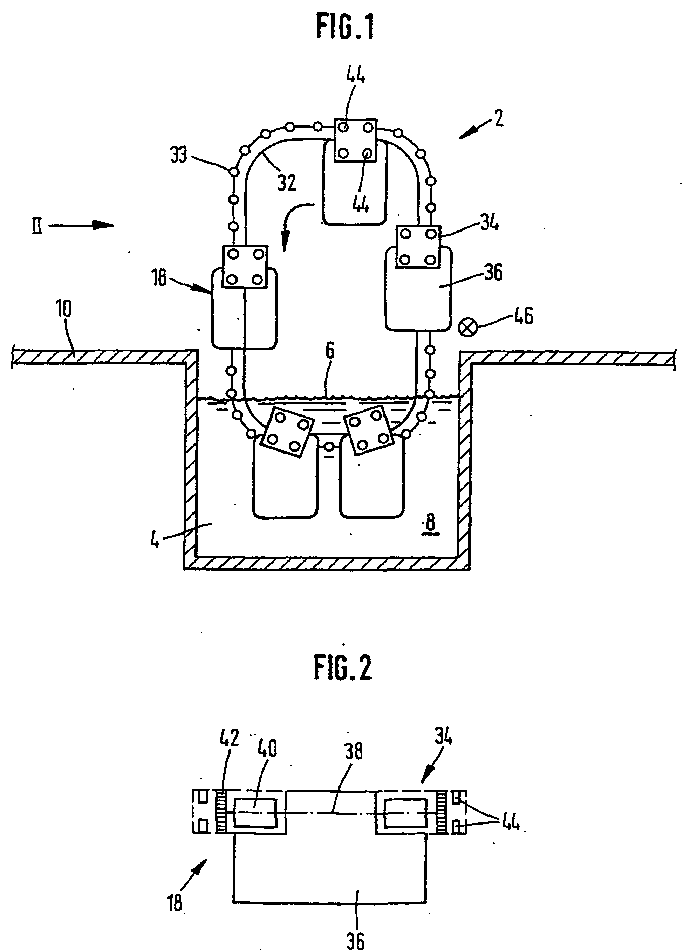

- Fig. 1: eine Gasbetäubungsanlage für Schlachttiere in Seitenansicht und teilweise geschnitten;
- Fig. 2: eine Transportgondel der Gasbetäubungsanlage von Fig. 1 in größerer Frontansicht gemäß Pfeil II in Fig. 1;

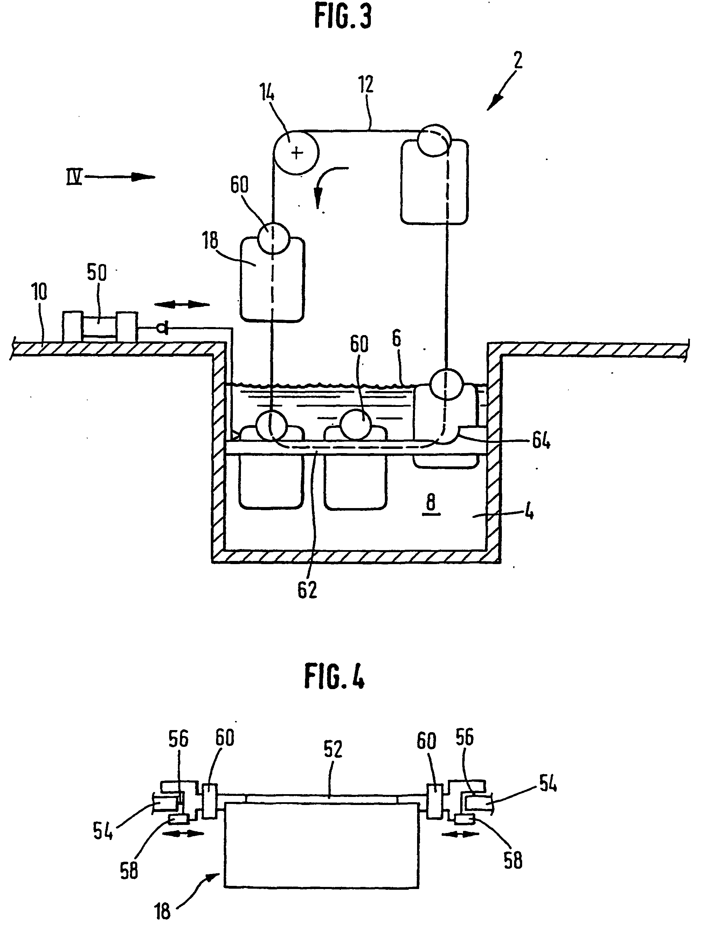

- Fig. 3: ein weiteres Ausführungsbeispiel 1 einer Gasbetäubungsanlage in Seitenansicht und teilweise geschnitten;
- Fig. 4: eine Transportgondel der Gasbetäubungsanlage von Fig. 3 in vergrößerter Frontansicht gemäß Pfeil IV in Fig. 3;

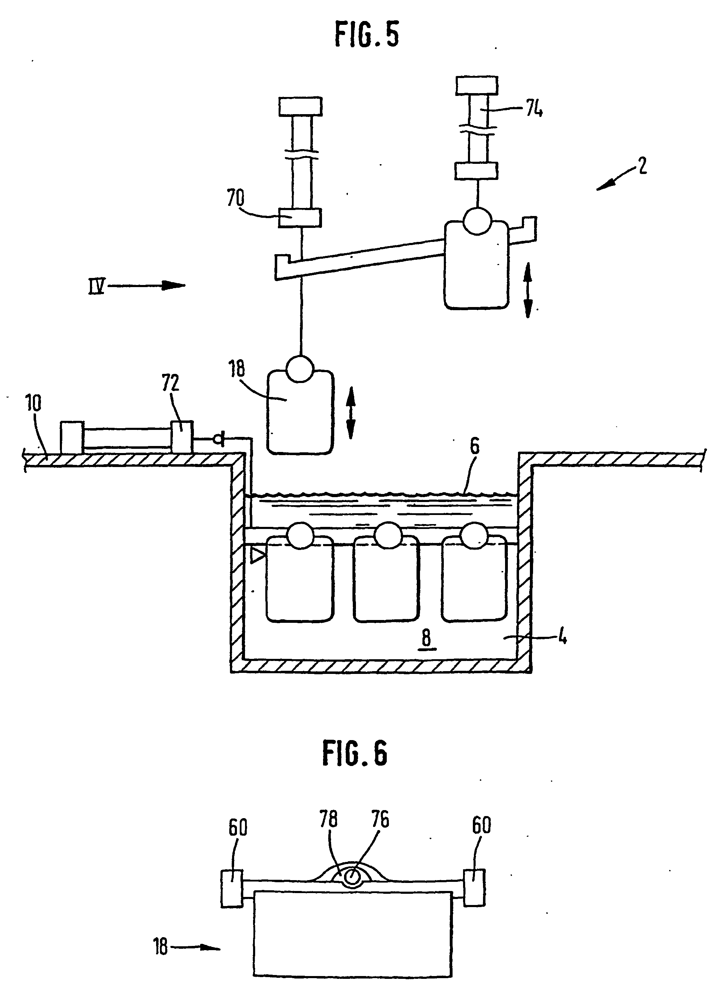

- Fig. 5: ein weiteres Ausführungsbeispiel einer Gasbetäubungsanlage für Schlachttiere in Seitenansicht und teilweise geschnitten;
- Fig. 6: eine Transportgondel der Gasbetäubungsanlage von Fig. 5 in vergrößerter Frontansicht gemäß Pfleil VI in Fig. 5;

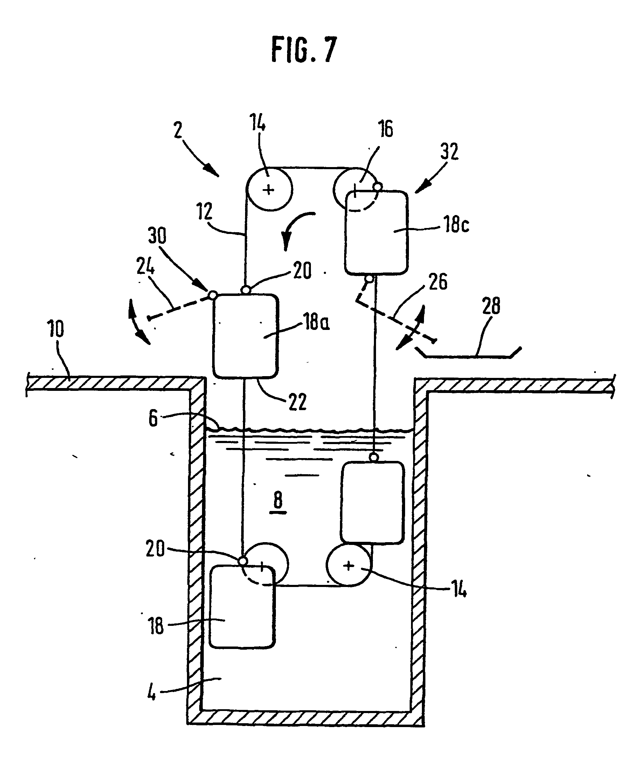

- Fig. 7: eine Gasbetäubungsanlage für Schlachttiere in Seitenansicht und teilweise geschnitten, gemäß dem Stand der Technik.

Im folgenden wird der Kürze halber von "Betäubungsanlage" statt "Gasbetäubungsanlage" gesprochen. Statt von "Schlachttieren" wird von "Schweinen" gesprochen, wobei sich versteht, daß die genauer zu beschreibenden Betäubungsanlagen auch für andere Schlachttiere, z. B. Schafe, brauchbar oder auslegbar sind.

Zunächst wird auf eine Betäubungsanlage 2 gemäß dem Stand der Technik, wie in Fig. 7 gezeichnet, eingegangen. Die Betäubungsanlage 2 weist eine gasdicht ausgebildete Grube 4 auf, die beim Betrieb der Betäubungsanlage 2 bis zu einem Niveau 6 mit Betäubungsgas 8, in der Regel Kohlendioxid, gefüllt ist. Kohlendioxid ist schwerer als Luft, so daß das Betäubungsgas 8 - mit Ausnahme der später anzusprechenden Ausschleppverluste - in der Grube 4 verbleibt.

Ein Stück oberhalb des Niveaus 6 befindet sich der Boden 10 des Schlachthofs. Der Höhenunterschied zwischen dem Niveau 6 und dem Boden 10 ist sinnvoll, um die Verluste von Betäubungsgas 8 aus der Grube 4 heraus möglichst gering zu halten.

An einem Paar von Transportketten 12, von denen nur die dem Betrachter entferntere schematisiert als Linie eingezeichnet ist, läuft über drei Paare von Umlenk-Kettenrädern 14 und ein Paar von Antriebs-Kettenrädern 16. Jede der Transportketten 12 hat im wesentlichen einen rechteckigen, endlosen Bewegungsweg mit "abgerundeten Ecken", wobei die Höhe des Rechtecks größer ist als die in Fig. 7 sichtbare, horizontale Breite. Die Antriebs-Kettenräder 16 werden z. B. durch einen nicht eingezeichneten Elektromotor angetrieben. An den Transportketten 12 sind mehrere Transportgondeln 18 so hängend befestigt, daß sie - in der Blickrichtung der Fig. 7 - stets eine im wesentlichen vertikal hängende Ausrichtung haben. Die Transportgondeln 18 haben alle einen gegenseitigen Abstand d, gemessen von Aufhängungspunkt 20 zu Aufhängungspunkt 20. Gesehen in der Blickrichtung der Fig. 7 befindet sich die schematisiert eingezeichnete, hintere Transportkette 12 hinter den Transportgondeln 18, während sich die nicht eingezeichnete, vordere Transportkette vor den Transportgondeln 18 befindet. Insgesamt hat man einen Aufbau, der sehr ähnlich einem Paternoster-Aufzug entspricht.

Die beiden Transportketten 12 werden selbstverständlich synchron zueinander angetrieben, was am einfachsten dadurch sichergestellt werden kann, daß die beiden Antriebs-Kettenräder 16 auf einer gemeinsamen Antriebswelle sitzen. Die Transportketten 12 werden intermittierend angetrieben. Wenn sich eine betrachtete Transportgondel 18 (diese ist in Fig. 7 mit 18a bezeichnet) auf einer Höhe befindet, bei der ihr Boden 23 mit dem Boden 10 des Schlachthofs fluchtet, wird der Antrieb der Transportketten 12 gestoppt. Der in Fig. 7 linken Umgrenzung der betrachteten Transportgondel 18a befindet sich eine Tür 24, die wahlweise geschlossen oder geöffnet sein kann. Der geöffnete Zustand ist in Fig.. 7 in unterbrochener Linie dargestellt. Das Öffnen erfolgt durch nach oben Schwenken der Tür 24 um eine horizontale Schwenkachse, die rechtwinklig zur Zeichnungsebene der Fig. 7 am oberen Rand der Tür 24 verläuft. Das Öffnen und Schließen der Tür 24 erfolgt mechanisiert, z. B. mittels einer Zylinder-Kolben-Einheit. Alternativ kann man die Tür 24 an der dem Betrachter der Fig. 7 zugewandten oder abgewandten Stirnseite der Transportgondel 18 vorsehen, wobei die Transportketten 12 am besten dort so verlaufen, daß der Zugang zu der Tür 24 frei ist.

Den Aufbau der Transportgondeln 18 muß man sich insgesamt im wesentlichen käfigartig vorstellen, wobei allerdings der Boden 22 besser ein durchgehendes Blech ist. Auch die Tür 24 ist wie ein Gitter mit recht großen Gitterstababständen ausgebildet. Es kommt naturgemäß nur darauf an, daß ein bei geöffneter Tür 24 in die Transportgondel 18a eingetriebenes Schwein bei anschließend geschlossener Tür 24 in der Transportgondel 18a eingesperrt ist. Flächig geschlossene Wände der Transportgondel 18a wären weniger günstig, weil ja in der Grube 4 das Betäubungsgas 8 freien Zutritt zum Inneren der Transportgondel 18 haben soll. Dieser Gesichtspunkt schließt jedoch nicht aus, daß Teilbereiche der Umgrenzung der Transportgondel 18 in flächenhaft durchgehendem Material ausgeführt werden.

Die betrachtete Transportgondel 18a steht für eine bestimmte Zeitdauer t in der gezeichneten und schon beschriebenen Höhe. Während der Zeitdauer t kann ein Schwein in die Transportgondel 18a hineingetrieben werden (bei größeren Transportgondeln 18 auch zwei oder sogar noch mehr Schweine). Dann wird die Tür 24 mechanisiert geschlossen, der Antrieb der Transportketten startet, und die betrachtete Transportgondel 18a wird so weit abgesenkt, bis die nächste Transportgondel 18b, die mit dem Boden 10 des Schlachthofs fluchtende Höhe erreicht (wie vorher die Transportgondel 18a). Bei diesem Zustand stoppt der Antrieb erneut, die nächste Transportgondel 18b kann mit einem Schwein beladen werden. Die zuerst betrachtete Transportgondel 18a hat dann eine Position erreicht, in der ihr Aufhängungspunkt 20 etwas unterhalb des Niveaus 6 des Betäubungsgases 8 ist, sodaß das enthaltene Schwein in das Betäubungsgas 8 eingetaucht ist. Sobald das Schwein tief genug in die Grube 4 abgesenkt ist, kann es nicht mehr Luftsauerstoff einatmen, sondern muß zwangsläufig das Betäubungsgas einatmen. Nach ganz kurzer Zeit verliert das Schwein die Besinnung, es ist betäubt.

Von jetzt an wird zu Abkürzungszwecken nur noch von "Gondel" statt von "Transportgondel" gesprochen.

Entsprechend der beschriebenen intermittierend angetriebenen Bewegung der Transportketten 12 bewegt sich die betrachtete Gondel 18a durch die Grube 4, und zwar zunächst ein Stück vertikal nach unten, dann kreisbogenförmig entsprechend einem Paar von Umlenk-Kettenrädern 14, dann ein Stück horizontal, dann wieder kreisbogenförmig entsprechend einem zweiten Paar von Umlenk-Kettenrädern 14 und schließlich ein Stück vertikal nach oben, so daß die Gondel 18a über das Niveau 6 des Betäubungsgases 8 angehoben wird. Die Aufwärtsbewegung geht intermittierend weiter bis die betrachtete Gondel 18 eine Höhe erreicht hat, wie sie in Fig. 7 als Gondel 18c eingezeichnet ist. Diese Höhenposition ist ein Stück höher als die Beladungs-Höhenposition der eingezeichneten Gondel 18a.

In der Höhenposition der eingezeichneten Gondel 18c wird eine weitere Tür 26 der Gondel 18c geöffnet. Der geöffnete Zustand der weiteren Tür 26 ist in Fig. 7 in unterbrochener Linie eingezeichnet. Man sieht auch, daß die weitere Tür 26 das in Fig. 7 rechte Umgrenzungsgitter der Gondel 18c und einen Großteil des Bodens 22 der Gondel 18c umfaßt. Die Schwenkachse für die Türbewegung ist unten an Ende des Bodenbereichs der weiteren Tür 26. Auch die weitere Tür 26 wird mechanisiert geöffnet und geschlossen, z. B. mittels mindestens einer Zylinder-Kolben-Einheit oder durch eine stationäre Nockenfläche, die beim Vorbeifahren der Gondel 18c die weitere Tür 26 öffnet. Man erkennt, daß bei geöffneter weiterer Tür 26 eine schräg nach rechtsunten geneigte "Rutsche" entsteht, und weil ein Großteil des Bodens 22 der Gondel 18c nach unten geschwenkt ist, wird das in der Gondel 18c enthaltene Schwein mittels Schwerkraft nach unten entladen und rutscht auf der weiteren Tür 26 nach rechts unten auf einen sich bewegenden Plattenbandförderer 28. Dort wird das liegende, betäubte Schwein durch Stechen in die Halsschlagader abgestochen und kann während des Weitertransports auf dem Transportband 28 im liegenden Zustand entbluten.

Es versteht sich, daß dann, wenn eine Gondel 18 in der beschriebenen Beladungsstation 30 angehalten ist, eine andere Transportgondel 18 in der beschriebenen Entladungsstation 32 angehalten ist. Auf diese Weise kann die beschriebene Zeitdauer t genutzt werden, um sowohl bei einer der Gondeln 18 die Beladung mit einem Schwein durchzuführen als auch bei einer anderen der Gondeln 18 die Entladung durchzuführen. Diese Gleichzeitigkeit ist aber nicht zwingend.

Die Grube 4 muß so breit sein (gemessen von links nach rechts in Fig. 7), daß die Verweilzeit jeder Gondel in dem Betäubungsgas 8 lang genug ist, um die Schweine in der Grube 4 sicher zu betäuben.

Nachfolgend werden Ausführungsbeispiele der Erfindung beschrieben. Teilweise sind die technischen Merkmale der jeweiligen Betäubungsanlage 2 gleich denen der bekannten Betäubungsanlage gemäß Figur 7. Dies gilt ganz besonders für den Aufbau der Gondeln 18 mit den Türen 24 und 26 und für die Höhenpositionen der Beladungsstation 30 und der Entladungsstation 32. Die übereinstimmenden Merkmale werden nicht nochmal explizit abgehandelt, sondern die Beschreibung der Ausführungsbeispiele wird sich auf die abweichenden Merkmale konzentrieren.

Bei der erfindungsgemäßen Betäubungsanlage gemäß Fig. 1 und 2 sind statt der zwei Transportketten 12 zwei stationäre Ketten 30 vorgesehen, von denen wiederum nur die dem Betrachter entferntere schematisiert eingezeichnet ist. Die Kette 30 ist vorzugsweise eine Laschenkette. Jede der Ketten 30 ist an einer Tragstruktur 32 aus Stahlprofilen befestigt. Jede Tragstruktur 32 und jede Kette 30 definieren eine Bewegungsbahn für die Gondeln, die rechteckig mit abgerundeten Ecken ganz ähnlich wie bei der Betäubungsanlage gemäß Fig. 7 ist. Die betreffende Tragstruktur 32 stellt zugleich eine Führung für die Gondeln 18 dar, wie weiter unten noch deutlicher wird.

Jede der Transportgondeln 18 ist mit einem Einzelbewegungsantrieb ausgestattet. Jede der Gondeln 18 besitzt ein Antriebsmodul 34 und ein Transportmodul 36, welches um eine Achse 38, die rechtwinklig zur Zeichnungsebene der Fig. 1 verläuft, drehbar an dem Antriebsmodul 34 befestigt ist, und stets im wesentlichen senkrecht von dem Antriebsmodul 34 nach unten hängt. Das Antriebsmodul 34 hat an jedem Ende einen Elektromotor 40 mit Untersetzungsgetriebe und ein hiervon antreibbares Kettenrad 42. Jedes der Kettenräder 42 kämmt mit einer der Ketten 30.

In Fig. 1 erkennt man, daß der Antiriebsmodul 34 an jedem Ende insgesamt vier Führungsklötze 44 besitzt, die mit der Tragstruktur 32 zusammenwirken. Konkret handelt es sich um ein erstes Paar von Führungsklötzen 44, die die Tragstruktur 32 von zwei Seiten her einfassen und in Bewegungsrichtung der betreffenden Gondel 18 weiter vorn sind, und um ein zweites Paar von Führungsblöcken 44, die ebenfalls die Tragstruktur 32 von zwei Seiten her einfassen, aber in Bewegungsrichtung der Gondel ein Stück weiter hinten angeordnet sind. Durch die Führungsblöcke 44 ist sichergestellt, daß das betreffende Kettenrad 42 nicht außer Eingriff mit der betreffenden Kette 30 kommen kann und daß der Antriebsmodul zwar dem Verlauf der Tragstruktur 32 folgt, aber sich nicht gegeüber der Tragstruktur 32 um eine rechtwinklig zur Zeichnungsebene der Fig. 1 verlaufende Achse verdrehen kann.

Das dem betreffenden Elektromotor 40 zugeordnete Untersetzungsgetriebe kann als selbsthemmendes Getriebe ausgebildet sein. Alternativ könnte man eine Bremse vorsehen, die selbsttätig in Aktion tritt, sobald der Elektromotor 40 keinen Strom erhält.

Da die Gondeln 18 jeweils mit einem Einzelbewegungsantrieb ausgestattet sind, kann ihre Geschwindigkeit im Verlauf der endlosen Bewegungsbahn variiert werden. Die Steuerung kann z. B. durch Lichtschranken 46 bewerkstelligt werden. So kann z. B. kurz vor Erreichen der Beladungsstation 30 ein Befehl an den betreffenden Antriebsmodul 34 gehen, die Fahrt zu verlangsamen und nach kurzer Zeit ganz anzuhalten. Sobald die betrachtete Gondel 18 eine Höhenposition erreicht hat, daß sie gänzlich in dem Betäubungsgas 8 eingetaucht ist, kann ein Befehl zur Langsamfahrt ergehen. Sobald die betrachtete Gondel 18 kurz vor dem Auftauchen aus dem Betäubungsgas 8 ist, kann ein Befehl für Normalfahrt ergehen. Kurz vor Erreichen der Entladungsstation 32 kann ein Befehl zur Verlangsamung und alsbaldigem Anhalten ergehen. Das Wiederanfahren in der Beladungsstation 30 und in der Entladungsstatio 32 kann z. B. zeitgesteuert erfolgen. Es versteht sich, daß den Elektromotoren 40 elektrische Energie zugeführt werden muß, z. B. über Schleifkontakte oder berührungsfrei durch Induktion.

Da die Gondeln 18 in der Grube 4 mit kleinerer Geschwindigkeit bewegt werden als auf der restlichen Bewegungsbahn, stellt sich in der Grube 4 selbsttätig ein geringerer gegenseitiger Abstand der Gondeln 18 ein. Es ist günstig, die Geschwindigkeitsabstimmung so vorzunehmen, daß sich in der Grube 4 ein sehr geringer gegenseitiger Abstand der Gondeln einstellt, wodurch die in Fig. 1 von links nach rechts gemessene Breite der Grube optimal ausgenutzt wird. Im Vergleich zum Stand der Technik kann die Stundenleistung der Anlage 2 erhöht werden, ohne die Grube 4 erheblich zu verbreitern oder überhaupt zu verbreitern. Bei gleichbleibender Stundenleistung ist zuweilen eine Verschmälerung der Grube 4 möglich.

Bei der Betäubungsanlage 2 gemäß Fig. 3 und 4 weist die Bewegungseinrichtung für die Gondeln 18 zum einen ein Paar von Transportketten 12, im Grundsatz analog wie bei der Betäubungsanlage 2 von Fig. 7, und andererseits eine hydraulische oder pneumatische Zylinder-Kolben-Einheit 50 für den waagrechten Bewegungsabschnitt innerhalb der Grube 4 auf.

An ihrer Oberseite ist jede der Gondeln 18 mit einem Träger 52 ausgerüstet, der sich in einer Richtung rechtwinklig zur Zeichnungsebene der Figur 3 erstreckt. An voneinander beabstandeten Aufhängungspunkten 20 (ganz analog wie bei der Betäubungsanlage 2 der Fig. 7) weist jede Transportkette 12 einen Mitnahmebolzen 54 auf, der von unten her in einem der Endbereiche des Trägers 52 in eine komplementäre Ausnehmung 56 eingreifen kann. Es kann eine Sicherungslasche 58 vorgesehen sein, um bei in die Ausnehmung 56 eingefahrenem Mitnahmebolzen 54 ein unbeabsichtigtes Außereingriffkommen zwischen den zwei Mitnahmebolzen 54 und dem Träger 52 zu verhindern. Die Sicherungslasche 58 läßt sich zwischen einer Sperrstellung und einer Nicht-Sperrstellung verschieben.

Außerdem ist der Träger 52 in jedem der zwei Endbereiche mit einer drehbaren Rolle 60 versehen. In der Grube 4 ist ein waagrecht von links nach rechts verlaufendes Paar von Schienen 62 vorgesehen.

Wenn eine betrachtete Gondel 18, hängend an dem Paar von Transportketten 12 mittels des Eingriffs von zwei Mitnahmebolzen 54 in zwei Ausnehmungen 56 des Trägers 52, in die Grube 4 abgesenkt wird, wird, bevor der betreffende Aufhängungspunkt 20 die tiefste Stelle bzw. den waagrechten Abschnitt seiner Bahn in der Grube 4 erreicht, die betrachtete Gondel 18 durch Aufsetzen ihrer zwei Rollen 60 ihrer auf das Paar von Schienen 62 auf diesen Schienen 62 abgestützt. Gleichzeitig werden die beiden Sicherungslaschen 58 der betrachteten Gondel 18 in Freigabestellung verschoben, z. B. durch Elektromagneten oder pneumatisch oder hydraulisch. Daraufhin wandern die Mitnahmebolzen 54 bei sich weiterbewegenden Transportketten 12 nach unten aus den Ausnehmungen 56 heraus, sodaß die betrachtete Gondel 18 freigegeben wird. Anschließend wird die Zylinde-Kolben-Einheit 50 betätigt und schiebt, unmittelbar einwirkend auf die Gondel 18 ganz links in Fig. 3, die Gesamtreihe der auf den Schienen 62 abgestützten Gondeln 18 nach rechts in Fig. 3, und zwar so weit, bis die ganz rechte Gondel 18 den rechten Endbereich des Paars von Schienen 62 erreicht hat (definiert z. B. durch kleine Ausrundungen 64 in den Schienen 62). Diese waagrechte Verschiebung ist erfolgt um eine Strecke, die etwas größer als die in Fig. 3 waagrecht gemessene Breite einer Gondel 18 ist, so daß nach dem Zurückfahren der Zylinder-Kolben-Einheit 50 am linken Endbereich der Grube 4 wieder Platz zum Absenken der nächsten Gondel 18 auf das Paar von Schienen 62 besteht. Die sich ganz rechts in Fig. 2 auf dem Paar von Schienen 63 befindliche Gondel 18 wird vom nächsten dorthin kommenden Paar von Mitnahmebolzen 54 durch Eingriff von unten her in das Paar von Ausnehmungen 56 gegriffen und nach oben weggehoben. Wegen der geringeren mittleren Verschiebgeschwindigkeit der Gondeln 18 auf den Schienen 62 ist dies nicht dasselbe Paar von Mitnahmebolzen 54 für die betrachtete Gondel 18 wie vorher, sondern das Paar von Mitnahmebolzen 54 hat gleichsam eine oder mehrere Gondeln 18 überholt und geht jetzt in Eingriff mit einer in Bewegungsrichtung weiter vorn befindlichen Gondel 18. Abgesehen von der zeitweisen Freigabe jeder betrachteten Gondel 18 für den waagrechten Verschiebeweg in der Grube 4 leistet das Paar von Transportketten 12 den gleichen Bewegungsablauf wie bei der Betäubungsanlage 2 gemäß Figur 7.

Bei der Betäubungsanlage 2 gemäß Fig. 5 und 6 gibt es weder einen Eigenbewegungsantrieb der Gondeln 18 noch eine Transportkette 12. Die Bewegungen der Gondeln werden durch hydraulische oder pneumatische Zylinder-Kolben-Einheiten bewerkstelligt, teilweise auch allein durch Schwerkraft.

In Fig. 5 erkennt man eine erste Zylinder-Kolben-Einheit 70, die gleichsam die Bewegung in der linken vertikalen Seite des Bewegungsbahn-Rechtecks bewältigt. Man erkennt ferner eine zweite Zylinder-Kolben-Einheit 72, die gleichsam die untere Horizontalseite des Bewegungsbahn-Rechtecks bewältigt. Und man erkennt eine dritte Zylinder-Kolben-Einheit 74, die gleichsam die rechte Vertikalseite des Bewegungsbahn-Rechtecks bewältigt. Der Kolben der ersten Zylinder-Kolben-Einheit 70 besitzt an seinem Ende einen Querbolzen 76, der lösbar in ein Auge 78 an der Oberseite einer betrachteten Gondel 18 eingreift. Wenn die betrachtete Gondel 18 vollständig in die Grube 4 abgesenkt ist, wird dieser Bolzen 76 zurückgezogen, z. B. elektromagnetisch oder pneumatisch oder hydraulisch, so daß der Kolben der ersten Zylinder-Kolben-Einheit 70 ganz nach oben zurückfahren kann. Unten in der Grube 4 stützt sich die betrachtete Gondel 18 mit Rollen 60 auf einem Paar von Schienen 62 ab, ganz analog wie geschildert im Zusammenhang mit Fig. 3. Die zweite Zylinder-Kolben-Einheit 72 leistet die Horizontalverschiebung eines "Pakets" von Gondeln 18 ganz analog wie im Zusammenhang mit Fig. 3 geschildert. Wenn die am weitesten rechts befindliche Gondel 18 des "Pakets" von Gondeln 18, die in Fig. 5 rechte Endposition auf den Schienen 62 erreicht hat, kann sie von dem Kolben der dritten Zylinder-Kolben-Einheit 64 gegriffen werden mittels eines Bolzens 76, ganz analog wie für die erste Zylinder-Kolben-Einheit 70 geschildert. Mittels der dritten Zylinder-Kolben-Einheit 74 wird die betrachtete Gondel 18 zunächst angehoben bis zur Entladungsstation 32, dann dort für eine Zeitdauer t angehalten. Unmittelbar von dort oder nach weiterer Anhebung um ein kleines Stück wird die betrachtete Gondel 18 mit ihren Rollen 60 auf ein oberes Paar von Schienen 76 aufgesetzt, die leicht nach links-abwärts geneigt verlaufen. Auf diesen Schienen 76 wird die betrachtete Gondel 18 durch Schwerkraft hinüber zum Bewegungsbereich der ersten Zylinder-Kolben Einheit verfahren. Der Kolben der ersten Zylinder-Kolben-Einheit 70 wird mittels des Bolzens 76 in Eingriff mit der betrachteten Gondel 18 gebracht. Die Gondel 18 wird zur Beladungsstation 30 abgesenkt und dort für die Zeitdauer t angehalten. Daran schließt sich das Absenken der Gondel 18 in die Grube 4 an.

Die Steuerung der Zylinder-Kolben-Einheiten 70 und 72 und 74 kann z. B. eine Zeitsteuerung sein. Die einzelnen Bewegungsphasen der Zylinder-Kolben-Einheiten sind in der Zeitsteuerung so eingerichtet, daß die erste Zylinder-Kolben-Einheit erst dann nach unten ausfährt, wenn sich eine Gondel am linken Ende der Schienen 76 befindet, daß nur dann eine Gondel 18 mit der Zylinder-Kolben-Einrichtung 70 ganz nach unten auf das linke Ende der Schienen 62 gefahren wird, wenn dort Platz für eine neue Gondel ist, und daß die dritte Zylinder-Kolben-Einrichtung 74 erst dann eine Gondel 18 unten in der Grube 4 erfaßt und nach oben bewegt, wenn sich eine Gondel 18 am rechten Ende der Schienen 62 befindet.

Das Ausführungsbeispiel gemäß Fig. 5 und 6 läßt sich dahingehend abwandeln, daß die oberen Schrägschienen 76 nicht vorhanden sind, und daß die linke Absenk-Bewegungsbahn (bisher vertikal) und die rechte Anhebe-Bewegungsbahn (bisher vertikal) nach Art eines schmalen Dreiecks mit kleinem Winkel an der oberen Spitze zusammengefaßt werden. Eine einzige Zylinder-Kolben-Einrichtung der Zylinder-Kolben-Einheiten 70 und 74 kann dann dafür vorgesehen sein, eine betrachtete Gondel 18 links nach unten abzusenken, dann mit ihrem unteren Ende nach rechts hinüberzuschwenken und dort eine andere Gondel 18 zum Anheben "abzuholen". Nach dem Entladen des Schweins wird dieses andere Gondel 18 von oben her in die linke Bahn gemäß der linken Dreiecksseite eingefahren und kann dort nach unten bewegt werden. Eine weitere Abwandlung ist dahingehend möglich, daß rechtwinklig zur Zeichnungsebene der Fig. 5 zwei derartige Kombinations-Zylinder-Kolben-Einheiten hintereinander angeordnet sind. Während die eine dieser zwei Zylinder-Kolben-Einheiten eine Gondel 18 nach unten bewegt, kann die ander der zwei Zylinder-Kolben-Einheiten eine andere Gondel 18 im "rechten Dreieckschenkel" nach oben bewegen. In der nächsten Zeitphase kann die zuerst betrachtete Zylinder-Kolben-Einrichtung eine Gondel 18 nach oben bewegen, während die als zweites betrachtete Zylinder-Kolben-Einrichtung die schon von ihr angehobene Gondel 18 jetzt in dem "linken Dreiecksschenkel" nach unten bewegt. Insbesondere bei der zuvor geschilderten Ausführungsvariante mit nur einer Kombinations-Zylinder-Kolben-Einrichtung kann man durchaus die Beladungsstation 30 und die Entladungsstation 32 gleichsam an der Dreiecksspitze zusammenfassen und dort zunächst ein betäubtes Schwein entladen und anschließend ein noch zu betäubendes Schwein in die Gondel 18 einbringen.

Bei allen Ausführungsbeispielen der Erfindung war die Grube 4 so breit, daß mit den erforderlichen Minimalabständen zwischen den Gondeln 18 dort Platz für drei Gondeln 18 nebeneinander war. Für einen erheblichen Teil der Zeit befanden sich jedoch nur zwei Gondeln 18 gleichzeitig nebeneinander unten in der Grube 4, wenn nämlich frisch eine Gondel 18 nach oben bewegt worden ist und noch keine neue Gondel links in der Grube 4 abgesenkt worden ist. Zur weiteren Erhöhung der Stundenleistung könnte man z. B. die Bewegungen beschleunigen und/oder den Gondelabstand beim Absenken und beim Anheben verkleinern und zum Ausgleich die Grube 4 so weit verbreitern, daß z. B. Platz für vier Gondeln 18 entsteht.

Obwohl bei zwei Ausführungsbeispielen eine Zylinder-Kolben-Einheit als Bewegungsantrieb für den zweiten Bewegungsabschnitt beschrieben worden ist, wird betont, daß eine alternativ bevorzugte Möglichkeit darin besteht, im zweiten Bewegungsabschnitt mit Hilfe der Schwerkraft auf einer schrägen Bahn zu bewegen, analog wie bei Fig.5 für den vierten Bewegungsabschnitt geschildert. Dies ist möglich in Kombination mit allen anderen Arten von Bewegungsantrieben in den anderen Bewegungsabschnitten.

## Patentansprüche

1. Gasbetäubungsanlage für Schlachttiere, aufweisend:
(a) eine Grube (4) zur Aufnahme von Betäubungsgas (8) mit einem bestimmten Niveau (6),
(b) eine Mehrzahl von Betäubungsbehältern (18), die jeweils eine öffenbare Tür (24; 26) und eine derartige Größe aufweisen, dass mindestens ein Schlachttier in dem Betäubungsbehälter (18) aufgenommen werden kann;
(c) und eine Bewegungseinrichtung, mit der die Betäubungsbehälter (18) nacheinander jeweils
- in einem ersten Bewegungsabschnitt von einer Beladungsstation (30), wo der Betäubungsbehälter (18) mit mindestens einem Schlachttier beladen werden kann, in die Grube (4) bis unter das Betäubungsgasniveau (6),
- dann in einem zweiten Bewegungsabschnitt unter dem Betäubungsgasniveau (6) durch die Grube (4),
- dann in einem dritten Bewegungsabschnitt aus der Grube (4) zu einer Entladungsstation (32), wo das Schlachttier entladen werden kann, wobei die Entladungsstation (32) mit der Beladungsstation (30) zusammengefasst ist oder von der Beladungsstation (30) separat ist,
- und schließlich, sofern die Entladungsstation (32) von der Beladungsstation (30) separat ist, in einem vierten Bewegungsabschnitt von der Entladungsstation (32) wieder zu der Beladungsstation (30) bewegbar sind,
- wobei die Bewegungseinrichtung dafür ausgebildet ist, die Betäubungsbehälter (18) in dem zweiten Bewegungsabschnitt mit zeitlich gemittelt geringerer Geschwindigkeit und mit geringerem gegenseitigen Abstand zu bewegen als in dem ersten Bewegungsabschnitt, und einen eigenen Bewegungsantrieb für den zweiten Bewegungsabschnitt aufweist,
**dadurch gekennzeichnet**,
(d) dass der Bewegungsantrieb für den zweiten Bewegungsabschnitt eine Transportkette mit Mitnehmern für die Betäubungsbehälter (18) aufweist.

2. Gasbetäubungsanlage nach Anspruch 1,
**dadurch gekennzeichnet, dass** die Betäubungsbehälter (18) freigebbar mit mindestens einer weiteren Transportkette (12) als erstem Bewegungsantrieb gekoppelt sind.

3. Gasbetäubungsanlage nach Anspruch 1,
**dadurch gekennzeichnet, dass** ein erster Bewegungsantrieb, im Wesentlichen mindestens für den ersten Bewegungsabschnitt, eine Zylinder-Kolben-Einheit (70) aufweist;
und ein dritter Bewegungsantrieb, im Wesentlichen mindestens für den dritten Bewegungsabschnitt, eine Zylinder-Kolben-Einheit (74) aufweist.

4. Gasbetäubungsanlage für Schlachttiere, aufweisend:
(a) eine Grube (4) zur Aufnahme von Betäubungsgas (8) mit einem bestimmten Niveau (6),
(b) eine Mehrzahl von Betäubungsbehältern (18), die jeweils eine öffenbare Tür (24; 26) und eine derartige Größe aufweisen, dass mindestens ein Schlachttier in dem Betäubungsbehälter (18) aufgenommen werden kann;
(c) und eine Bewegungseinrichtung, mit der die Betäubungsbehälter (18) nacheinander jeweils
- in einem ersten Bewegungsabschnitt von einer Beladungsstation (30), wo der Betäubungsbehälter (18) mit mindestens einem Schlachttier beladen werden kann, in die Grube (4) bis unter das Betäubungsgasniveau (6),
- dann in einem zweiten Bewegungsabschnitt unter dem Betäubungsgasniveau (6) durch die Grube (4),
- dann in einem dritten Bewegungsabschnitt aus der Grube (4) zu einer Entladungsstation (32), wo das Schlachttier entladen werden kann, wobei die Entladungsstation (32) mit der Beladungsstation (30) zusammengefasst ist oder von der Beladungsstation (30) separat ist,
- und schließlich, sofern die Entladungsstation (32) von der Beladungsstation (30) separat ist, in einem vierten Bewegungsabschnitt von der Entladungsstation (32) wieder zu der Beladungsstation (30) bewegbar sind,
- wobei die Bewegungseinrichtung dafür ausgebildet ist, die Betäubungsbehälter (18) in dem zweiten Bewegungsabschnitt mit zeitlich gemittelt geringerer Geschwindigkeit und mit geringerem gegenseitigen Abstand zu bewegen als in dem ersten Bewegungsabschnitt,
(d) dass die Betäubungsbehälter (18) jeweils mit einem Einzelbewegungsantrieb (40,42) ausgerüstet sind.

5. Gasbetäubungsanlage nach Anspruch 4,
**dadurch gekennzeichnet, dass** der jeweilige Einzelbewegungsantrieb (40; 42) in formschlüssiger Weise mit einem stationären Gegenpart (33) zusammenwirkt.

6. Gasbetäubungsanlage nach Anspruch 5,
**dadurch gekennzeichnet, dass** der Einzelbewegungsantrieb einen Elektromotor (40) und ein von dem Elektromotor antreibbares Kettenrad (42) aufweist und dass der stationäre Gegenpart eine Kette (33) ist

7. Gasbetäubungsanlage nach einem der Ansprüche 1 bis 6,
**dadurch gekennzeichnet, dass** die Grube (4) so breit ist, dass sie Platz für mindestens drei Betäubungsbehälter (18) nebeneinander bietet.

8. Gasbetäubungsanlage nach einem der Ansprüche 1 bis 7,
**dadurch gekennzeichnet, dass** die Grube (4) von ihrem Grund bis zu dem Betäubungsgasniveau (6) weniger tief ist als die zweifache Höhe eines Betäubungsbehälters (18).

## Claims

1. A gas stunning facility for slaughter animals, comprising:
(a) a pit (4) for receiving stunning gas (8) to a predetermined level (6),
(b) a plurality of stunning containers (18) each having a door (24; 26) adapted to be opened and being of such a size that at least one slaughter animal can be received in the stunning container (18);
(c) and a movement means through which the stunning containers (18) are each adapted to be successively moved
- in a first movement segment from a loading station (30), in which the stunning container (18) can be loaded with at least one slaughter animal, into the pit (4) as far as under the stunning gas level (6),
- then in a second movement segment through the pit (4) under the stunning gas level (6),
- then in a third movement segment from the pit (4) to an unloading station (32) for unloading of the slaughter animal, the unloading station (32) being combined with the loading station (30) or separate from the loading station (30),
- and finally, if the unloading station (32) is separate from the loading station (30), in a fourth movement segment from the unloading station (32) back to the loading station (30),
- the movement means being designed for moving the stunning containers (18) in the second movement segment at a lower time-averaged speed and with a lesser mutual distance than in the first movement segment, and having a movement drive of its own for the second movement segment,
**characterized in**
(d) that the movement drive for the second movement segment comprises a transport chain having entraining means for the stunning containers (18).

2. A gas stunning facility according to claim 1,
**characterized in that** the stunning containers (18) are releasably coupled to at least one additional transport chain (12) as first movement drive.

3. A gas stunning facility according to claim 1,
**characterized in that** a first movement drive, substantially at least for the first movement segment, comprises a piston and cylinder unit (70);
and a third movement drive, substantially at least for the third movement segment, comprises a piston and cylinder unit (74).

4. A gas stunning facility for slaughter animals, comprising:
(a) a pit (4) for receiving stunning gas (8) to a predetermined level (6),
(b) a plurality of stunning containers (18) each having a door (24; 26) adapted to be opened and being of such a size that at least one slaughter animal can be received in the stunning container (18);
(c) and a movement means through which the stunning containers (18) are each adapted to be successively moved
- in a first movement segment from a loading station (30), in which the stunning container (18) can be loaded with at least one slaughter animal, into the pit (4) as far as under the stunning gas level (6),
- then in a second movement segment through the pit (4) under the stunning gas level (6),
- then in a third movement segment from the pit (4) to an unloading station (32) for unloading of the slaughter animal, the unloading station (32) being combined with the loading station (30) or separate from the loading station (30),
- and finally, if the unloading station (32) is separate from the loading station (30), in a fourth movement segment from the unloading station (32) back to the loading station (30),
- the movement means being designed for moving the stunning containers (18) in the second movement segment at a lower time-averaged speed and with a lesser mutual distance than in the first movement segment,
**characterized in**
(d) that the movement containers (18) are each provided with an individual movement drive (40, 42).

5. A gas stunning facility according to claim 4,
**characterized in that** the respective individual movement drive (40; 42) cooperates with a stationary counterpart (33) by positive engagement.

6. A gas stunning facility according to claim 5,
**characterized in that** the individual movement drive is an electric motor (40) and has a sprocket wheel (42) adapted to be driven by the electric motor, and that the counterpart is a chain (33).

7. A gas stunning facility according to any of claims 1 to 6,
**characterized in that** the pit (4) has such a width that it offers space for at least three stunning containers (18) arranged side by side.

8. A gas stunning facility according to any of claims 1 to 7,
**characterized in that** the pit (4), as measured from its bottom to the stunning gas level (6), is of lesser depth than twice the height of a stunning container (18).

## Revendications

1. Dispositif d'anesthésie au gaz pour des animaux de boucherie, comprenant :
(a) une fosse (4) pour la réception de gaz anesthésiant (8) jusqu'à un niveau déterminé (6),
(b) une pluralité de caissons d'anesthésie (18), comportant chacun une porte qui peut s'ouvrir (24 ; 26) et qui sont de dimensions telles qu'au moins un animal de boucherie puisse être réceptionné dans le caisson d'anesthésie (18),
(c) et un dispositif de déplacement, à l'aide duquel chacun des caissons d'anesthésie (18) peut être déplacé
- dans une première section de déplacement d'un poste de chargement (30), où le caisson d'anesthésie (18) peut être chargé avec au moins un animal de boucherie jusque dans la fosse (4), en dessous du niveau de gaz anesthésiant (6),
- ensuite dans une deuxième section de déplacement, en dessous du niveau de gaz anesthésiant (6), à travers la fosse (4),
- puis dans une troisième section de déplacement, hors de la fosse (4), vers un poste de déchargement (32), où l'animal de boucherie peut être déchargé, le poste de déchargement (32) étant regroupé avec le poste de chargement (30) ou étant séparé du poste de chargement (30),
- et pour finir, si le poste de déchargement (32) est séparé du poste de chargement (30), dans une quatrième section de déplacement, du poste de déchargement (32) à nouveau vers le poste de chargement (30).
- le dispositif de déplacement étant conçu pour que dans la deuxième section de déplacement, il déplace les caissons d'anesthésie (18) à plus faible vitesse moyenne calculée dans le temps et à plus faible distance réciproque que dans la première section de déplacement et comportant un propre entraînement en déplacement pour la seconde section de déplacement,
**caractérisé en ce que**
d) l'entraînement en déplacement pour la seconde section de déplacement comporte une chaîne de transport avec des entraîneurs pour les caissons d'anesthésie (18).

2. Dispositif d'anesthésie au gaz selon la revendication 1,
**caractérisé en ce que** les caissons d'anesthésie (18) sont accouplés de façon à pouvoir être libérés avec au moins une chaîne de transport supplémentaire (12), faisant office de premier entraînement en déplacement.

3. Dispositif d'anesthésie au gaz selon la revendication 1,
**caractérisé en ce qu'**un premier entraînement en déplacement comporte sensiblement au moins pour la première section de déplacement une unité cylindre/piston (70) ;
et un troisième entrainement en déplacement, comporte sensiblement au moins pour la troisième section de déplacement une unité cylindre/piston (74).

4. Dispositif d'anesthésie au gaz pour des animaux de boucherie, comportant :
(a) une fosse (4) pour réceptionner du gaz anesthésiant (8), jusqu'à un niveau déterminé (6).
(b) une pluralité de caissons d'anesthésie (18) comportant respectivement une porte qui peut s'ouvrir (24 : 26) et qui sont de dimensions telles qu'au moins un animal de boucherie puisse être réceptionné dans le conteneur d'anesthésie (18),
(c) et un dispositif de déplacement, à l'aide duquel chacun des caissons d'anesthésie (18) peut être déplacé.
- dans une première section de déplacement d'un poste de chargement (30), où le caisson d'anesthésie (18) peut être chargé avec au moins un animal de boucherie jusque dans la fosse (4) en dessous du niveau de gaz anesthésiant (6),
- ensuite dans une deuxième section de déplacement, en dessous du niveau de gaz anesthésiant (6), à travers la fosse (4),
- puis dans une troisième section de déplacement, hors de la fosse (4), vers un poste de déchargement (32), où l'animal de boucherie peut être déchargé, le poste de déchargement (32) étant regroupé avec le poste de chargement (30) ou étant séparé du poste de chargement (30),
- et pour finir, si le poste de déchargement (32) est séparé du poste de chargement (30), dans une quatrième section de déplacement, du poste de déchargement (32) à nouveau vers le poste de chargement (30),
- le dispositif de déplacement étant conçu pour qu'au cours de la deuxième section de déplacement, il déplace les caissons d'anesthésie (18) à plus faible vitesse moyenne calculée dans le temps et à plus faible distance réciproque qu'au cours de la première section de déplacement
**caractérisé en ce que**
(d) les caissons d'anesthésie (18) sont respectivement équipés d'un entraînement en déplacement individuel (40. 42).

5. Dispositif d'anesthésie au gaz selon la revendication 4,
**caractérisé en ce que** l'entraînement en déplacement individuel (40 ; 42) coopère par complémentarité de forme avec un pendant stationnaire (33).

6. Dispositif d'anesthésie au gaz selon la revendication 5,
**caractérisé en ce que** l'entraînement en déplacement individuel comporte un moteur électrique (40) et un pignon à chaîne (42) pouvant être entraîné par le moteur électrique et **en ce que** le pendant est une chaîne (33).

7. Dispositif d'anesthésie au gaz selon l'une quelconque des revendications 1 à 6,
**caractérisé en ce que** la fosse (4) est assez large pour offrir suffisamment de place pour au moins trois caissons d'anesthésie (18) placés côte à côte.

8. Dispositif selon l'une quelconque des revendications 1 à 7,
**caractérisé en ce que** de son fond jusqu'au niveau de gaz anesthésiant (6), la fosse (4) est moins profonde que le double de la hauteur d'un caisson d'anesthésie (18).
